# EUROPÄISCHE PATENTSCHRIFT

(11) **EP 2 474 091 B1**
(45) Veröffentlichungstag und Bekanntmachung des Hinweises auf die Patenterteilung: **03.07.2019**
(21) Anmeldenummer: 10747592.3
(22) Anmeldetag: 24.08.2010
(51) Int. Cl.: H02P 25/02

(54) **VERFAHREN ZUR BESTIMMUNG DER ROTORLAGE EINER FELDORIENTIERT BETRIEBENEN SYNCHRONMASCHINE**
METHOD FOR DETERMINING THE ROTOR POSITION OF A SYNCHRONOUS MACHINE WITH FIELD-ORIENTED CONTROL
PROCÉDÉ DE DÉTERMINATION DE LA POSITION ROTORIQUE D'UNE MACHINE SYNCHRONE FONCTIONNANT PAR ORIENTATION D'UN CHAMP

(30) Priorität: 02.09.2009 DE 102009039672
(43) Veröffentlichungstag der Anmeldung: 11.07.2012
(73) Patentinhaber: SEW-EURODRIVE GmbH & Co. KG, 76646 Bruchsal (DE)
(72) Erfinder: HAMMEL, Wolfgang, 76646 Bruchsal (DE); HARTMANN, Matthias, 76646 Bruchsal (DE); WOLF, Harald, 76698 Ubstadt-Weiher (DE)
(86) Internationale Anmeldenummer: PCT/EP2010/005166
(87) Internationale Veröffentlichungsnummer: WO 2011/026578

(56) Entgegenhaltungen:
- EP-A1- 1 653 601
- EP-A1- 2 023 479
- DE-A1- 10 226 974
- FRENZKE T ET AL: "Position-sensorless control of direct drive permanent magnet synchronous motors for railway traction", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 1372-1377, XP010739695, DOI: DOI:10.1109/PESC.2004.1355623 ISBN: 978-0-7803-8399-9

## Beschreibung

Die Erfindung betrifft ein Verfahren zur Bestimmung der Rotorlage einer feldorientiert betriebenen Synchronmaschine.

Aus der DE 102 26 974 A1 ist ein Verfahren zur Bestimmung der Rotorlage einer feldorientiert betriebenen Synchronmaschine bekannt. Dabei wird eine sensorlose Lageerkennung ausgeführt, indem der pulsweitenmodulierten Ausgangsspannung des Umrichters ein hochfrequentes Signal zusätzlich überlagert und aus dem zugehörigen Stromsignal der hochfrequente Anteil vom Grundwellenanteil separiert wird. Der hochfrequente Anteil wird zur Bestimmung des Rotorlagewinkels verwendet. Der Grundwellenanteil wird als Istwert einem Stromregler zugeführt.

Alternativ wären die hochfrequenten Anteile auch mittels eines Bandpasses abtrennbar.

Aus der DE 10 2008 025 408.8 - 32 ist ein Verfahren zum Regeln einer Synchronmaschine bekannt, bei der ein auf der induzierten Spannung senkrecht stehender Rotorflussraumzeiger gebildet und als Rückführgröße verwendet wird, die somit bei verschwindender Drift ebenfalls verschwindet.

Aus der EP 2 023 479 A1 ist ein System zur nahtlosen Lageermittlung bei einem Permanentmagnet-Läufer einer elektrischen Maschine bekannt.

Der Erfindung liegt daher die Aufgabe zugrunde, die Rotorlagenbestimmung weiterzubilden und das Regelverfahren für Synchronmaschinen zu verbessern.

Erfindungsgemäß wird die Aufgabe bei dem Verfahren nach den in Anspruch 1 angegebenen Merkmalen gelöst.

Wichtige Merkmale der Erfindung bei dem Verfahren zur Bestimmung der Rotorlage einer feldorientiert betriebenen Synchronmaschine sind, dass eine von der Rotorlage abhängige wirksame Induktivität vorgesehen ist,
wobei der Motorstrom erfasst wird und die Motorspannung unter Verwendung eines Pulsweitenmodulationsverfahrens gestellt wird,
wobei ein zur Pulsweitenmodulationsfrequenz synchrones Signal dem zu stellenden Motorspannungswert überlagert wird ,
wobei synchron zur Pulsweitenmodulationsfrequenz Werte des Motorstroms erfasst werden,
wobei ein durch das überlagerte Spannungssignal bewirkter Stromanteil und ein restlicher Stromanteil, also der Grundwellenanteil, bestimmt werden
wobei aus dem durch das überlagerte Spannungssignal bewirkten Stromanteil eine geschätzte Rotorwinkellage bestimmt wird, deren Fehlwinkel zur tatsächlichen Rotorwinkellage mittels eines Flussmodells vermindert wird,
wobei der restliche Stromanteil einem Stromregler zugeführt wird.

Von Vorteil ist dabei, dass ein sensorloses Betreiben einer Synchronmaschine mit einem verbesserten Regelverfahren ermöglicht ist. Insbesondere ist aus erfassten Strommesswerten ein für einen in der Zukunft liegenden Zeitpunkt extrapolierter Stromwert bestimmbar, der als Eingangswert für eine Reglerstruktur verwendbar ist, so dass die für das nächste Zeitintervall bestimmten Stellgrößen aus diesem extrapolierten Stromwert bestimmbar sind und zu diesem Zeitpunkt zeitgleich wirksam werden. Somit ist das Regelverfahren für die Synchronmaschine verbessert. Insbesondere ergibt sich im geschlossenen Stromregelkreis eine verringerte wirksame Totzeit, wodurch sich das Regelverhalten, insbesondere die erreichbare Bandbreite, erhöhen lässt.

Bei einer vorteilhaften Ausgestaltung wird eine Anzahl von Motorstrommesswerten zum Bestimmen von Parametern verwendet, die in einer dem Grundwellenanteil zugeordneten ersten parameterbehafteten Funktion vorgesehen sind und in einer dem durch das überlagerte Spannungssignal bewirkten Stromanteil zugeordneten zweiten parameterbehafteten Funktion, insbesondere wobei die Summe der parameterbehafteten Funktionen an die erfassten Stromwerte angepasst und/oder als Fittfunktionen angefittet werden. Von Vorteil ist dabei, dass für den Grundwellenanteil eine parameterbehaftete Funktion zum Fitten, also Anpassen, verwendet wird, die zumindest einen nichtlinearen Anteil aufweist. Auf diese Weise ist auch die Bestimmung des abzuseparierenden überlagerten höher frequenten Signals verbessert, da Abweichungen im Anpassen des Grundwellenanteils zu Verfälschungen bei der Bestimmung der Amplitude des durch das überlagerte Spannungssignal bewirkten Stromanteils führen und der Grundwellenstromanteil sehr präzise bestimmbar ist.

Bei einer vorteilhaften Ausgestaltung ist die erste parameterbehaftete Funktion ein Polynom n-ter Ordnung, insbesondere wobei die Anzahl um Eins größer ist als n. Von Vorteil ist dabei, dass das Polynom exakt bestimmbar ist.

Bei einer vorteilhaften Ausgestaltung ist die zweite parameterbehaftete Funktion ein Dreieckssignal und/oder eine aus linearen Abschnitten zusammengesetzte Funktion, insbesondere deren Amplitude ein Parameter ist und deren Frequenz synchron zur Pulsweitenmodulationsfrequenz ist. Von Vorteil ist dabei, dass der hochfrequente Anteil in sehr guter Näherung mathematisch abbildbar und mit nur einem Parameter beschreibbar ist.

Bei einer vorteilhaften Ausgestaltung beträgt die Anzahl vier oder größer als vier. Von Vorteil ist dabei, dass nur wenige Strommessungen zur Ausführung der Erfindung ausreichen.

Bei einer vorteilhaften Ausgestaltung wird nach Bestimmung der Parameter der parameterbehafteten Funktionen ein Stromwert extrapoliert für einen Zeitpunkt, an welchem die Werte der Stellgröße, insbesondere der Ausgangsspannung, wirksam gemacht werden, so dass zur Bestimmung der Werte der Stellgröße ein zeitgleicher Stromwert als Eingangswert für die Regelstruktur verwendet wird. Von Vorteil ist dabei, dass eine Extrapolation des Grundwellenanteils ausführbar ist und somit der in die Regelstruktur eingehende Wert dem gleichen Zeitpunkt zugeordnet ist wie auch die Stellgrößenwerte.

Bei einer vorteilhaften Ausgestaltung wird die Amplitude des durch das überlagerte Spannungssignal bewirkten Stromanteils aus einer Linearkombination von mindestens drei der erfassten Strommesswerte bestimmt. Von Vorteil ist dabei, dass eine Bestimmung der Amplitude in sehr einfacher Weise ermöglicht ist.

Bei einer vorteilhaften Ausgestaltung wird ein extrapolierter Stromwert für einen Zeitpunkt, an welchem ein Wert der Stellgröße, insbesondere der Ausgangsspannung, wirksam gemacht wird, bestimmt durch Linearkombination von mindestens drei der erfassten Strommesswerte. Von Vorteil ist dabei, dass eine sehr einfache und schnelle Extrapolation ausführbar ist.

Bei einer vorteilhaften Ausgestaltung wird ein Modellwert für die Winkellage aus den gemessenen elektrischen Größen Motorspannung und Motorstrom bestimmt, insbesondere wobei die Synchronmaschine ohne Winkellage-Sensor ausgestattet ist. Von Vorteil ist dabei, dass eine geberlose Regelung realisierbar ist bei einer Synchronmaschine.

Bei einer vorteilhaften Ausgestaltung weist die wirksame Induktivität in verschiedenen Rotorwinkellagen verschiedene Werte auf Insbesondere ist dadurch eine Rotorwinkellageerkennung auch bei sehr kleinen Drehzahlen und im Stillstand ausführbar.

Bei einer vorteilhaften Ausgestaltung beträgt die Periodendauer des überlagerten Signals das n-fache der Pulsweitenmodulationsdauer, wobei n eine ganz Zahl ist, die größer ist als Zwei. Von Vorteil ist dabei, dass eine Separation des Grundwellenanteils vom hochfrequenten Anteil ermöglicht ist, insbesondere mit gutem Signal-Rausch-Verhältnis.

Bei einer vorteilhaften Ausgestaltung wird der zu stellende Motorspannungswert nach einer jeweiligen Zeitdauer T_{ctrl} bestimmt, insbesondere die das Vierfache oder ein höheres ganzzahliges Vielfaches der Pulsweitenmodulationsdauer beträgt. Von Vorteil ist dabei, dass synchron zur Pulsweitenmodulationsdauer ein Strommesswert bestimmbar ist und nach Ermittelung von vier Strommesswerten der Grundwellenanteil und der höher frequente Anteil separierbar sind, wobei die Fittfunktionen den bestimmten Stromverlauf sehr gut annähern.

Bei einer vorteilhaften Ausgestaltung wird synchron zu den Zeitpunkten der größten Signalspannungsänderung der Motorstrom erfasst. Von Vorteil ist dabei, dass somit stets ein lokaler Extremalwert als Strommesswert erfasst wird. Auf diese Weise ist die Amplitude des höher frequenten Stromanteils besonders genau ermittelbar.

Bei einer vorteilhaften Ausgestaltung wird der durch das überlagerte Spannungssignal bewirkte Stromanteil, also der höher frequente Stromanteil, vom erfassten Strom subtrahiert und der so bestimmte Motorstrom als Istwert der feldorientierten Regelung zugeführt. Von Vorteil ist dabei, dass die Überlagerung separiert wird und somit der Grundwellenanteil zur Regelung verwendet wird, welcher das Regelverhalten der Maschine beeinflusst. Der höher frequente Stromanteil wird zur Rotorwinkellagenbestimmung verwendet.

Bei einer vorteilhaften Ausgestaltung wird ein geschätzter Flussraumzeiger erzeugt, dessen Richtung der geschätzten Rotorwinkellage entspricht und dieser geschätzte Flussraumzeiger dem Flussmodell zur Stützung zugeführt wird,
wobei dem Flussmodell auch der jeweilige Wert der gestellten Ausgangsspannung und des erfassten Motorstroms zugeführt wird. Dabei ist der geschätzte Flussraumzeiger auf einen Flussraumzeiger hin regelbar ist, der aus Ausgangsspannung und Motorstrom bestimmt wird. Von Vorteil ist dabei, dass die hohe Dynamik des Flussmodells auch bei sehr kleinen Drehzahlen nutzbar ist.

Bei einer vorteilhaften Ausgestaltung wird im Flussmodell ein Rotorflussraumzeiger bestimmt, dessen Differenz zum geschätzten Rotorflussraumzeiger einem Proportional-Integrierglied zugeführt wird,
wobei das Ausgangssignal des Proportional-Integriergliedes zur Driftreduzierung eines Integriergliedes des Flussmodells verwendet wird. Von Vorteil ist dabei, dass eine geberlose Regelung ermöglicht wird, bei der der Drift des Integrierglieds derart entgegenwirkbar ist, dass der geschätzte Flussraumzeiger in Richtung des physikalischen Flussraumzeigers hin geregelt wird und somit auf Grund der Stützung des Flussmodells keine Phasenverschiebung des Modellflussraumzeigers gegenüber dem tatsächlichen Flussraumzeiger resultiert.

Bei einer vorteilhaften Ausgestaltung wird unterhalb einer ersten Drehzahl das Flussmodell gestützt durch den auf dem geschätzten Rotorlagewinkel basierten Rotorflussraumzeiger, insbesondere wobei der Betrag vorgebbar ist und die Richtung aus dem durch das überlagerte Spannungssignal bewirkten Stromanteil geschätzt wird. Von Vorteil ist dabei, dass das Flussmodell auch bei sehr kleinen Drehzahlen und im Stillstand verwendbar ist.

Bei einer vorteilhaften Ausgestaltung wird oberhalb einer zweiten Drehzahl das Flussmodell gestützt durch einen Rotorflussraumzeiger, dessen Betrag vorgebbar und dessen Richtung senkrecht steht auf der Richtung des induzierten Spannungsraumzeigers, der eingangsseitig am Flussmodell gebildet wird. Von Vorteil ist dabei, dass oberhalb der zweiten Drehzahl eine hohe induzierte Spannung erzeugt wird und somit eine gute Rotorwinkellageerkennung ermöglicht ist. Des weiteren kann im oberen Drehzahlbereich die überlagerte hochfrequente Spannung abgeschaltet werden, was eine vollständige Ausnutzung der maximalen Umrichterausgangsspannung ermöglicht.

Bei einer vorteilhaften Ausgestaltung wird zwischen der ersten und zweiten Drehzahl das Flussmodell gestützt durch einen Rotorflussraumzeiger, der als Summe gebildet ist aus einem ersten Anteil vom auf dem geschätzten Rotorlagewinkel basierten Rotorflussraumzeiger und aus einem weiteren Anteil vom demjenigen Rotorflussraumzeiger, dessen Betrag vorgebbar und dessen Richtung senkrecht steht auf der Richtung des induzierten Spannungsraumzeigers, der eingangsseitig am Flussmodell gebildet wird, wobei das Verhältnis der Anteile frequenzabhängig ist. Von Vorteil ist dabei, dass in diesem Übergangsdrehzahlbereich, also zwischen erster und zweiter Drehzahl, ein kontinuierlicher Wechsel zwischen den rückgeführten Größen erfolgt, wodurch Unstetigkeiten im Regelverhalten vermieden werden.

Insbesondere ist die erste Drehzahl kleiner als die zweite Drehzahl.

Weitere Vorteile ergeben sich aus den Unteransprüchen.

Die Erfindung wird nun anhand von Abbildungen näher erläutert:
Erfindungsgemäß wird ein Elektromotor, insbesondere Synchronmotor, aus einem Umrichter gespeist, der in seiner Signalelektronik eine Regelschaltung umfasst. Der Synchronmotor umfasst dabei einen mit Dauermagneten bestückten Rotor. Alternativ ist aber auch ein Rotor mit Felderregerwicklung verwendbar, wobei die Erregerwicklung dann jedoch induktiv gekoppelt oder mittels Bürsten mit unipolarem Strom zu versorgen ist.

Dieser geberlos, also ohne Winkelsensor, arbeitenden Regelschaltung wird der Motorstrom als Istwert zugeführt.

Von der Regelschaltung wird die Motorspannung als Ausgangsgröße gestellt, indem ein jeweiliges Pulsweitenmodulationsverhältnis ausgegeben wird, das bei Mittelung über die Pulsweitenmodulationsperiodendauer T_{PWM} den zu stellenden Wert ergibt. Dabei werden von der Regelschaltung in jedem Zeitintervall T_{ctrl} neue Werte für die Stellgrößen berechnet und somit ein jeweils nächster Ausgangsspannungswert bestimmt, also ein jeweils nächster Wert für die Motorspannung. Diese Zeitdauer T_{ctrl} beträgt im gezeigten Ausführungsbeispiel vier T_{PWM} Pulsweitenmodulationsperiodendauern.

Zur Winkellageerkennung des Rotors wird der Ausgangsgröße der Regelschaltung ein hochfrequentes Trägersignal überlagert. Im Folgenden wird die Ausgangsgröße auch als Grundwelle bezeichnet, der das Trägersignal überlagert ist.

Dabei wird das Trägersignal in einer geschätzten Richtung des Rotors dem von der Regelung bestimmten Grundwellensignal, also dem Motorspannungsraumzeiger, überlagert. Hierbei ist der Motorspannungsraumzeiger als ein in einer zweidimensionalen Ebene drehbarer Vektor darstellbar. Die Amplitude des Trägersignals ist skalar darstellbar und die Richtung entspricht der geschätzten Richtung des Rotors. Der vom Umrichter ausgangsseitig zur Versorgung des Synchronmotors zur Verfügung zu stellende Spannungsraumzeiger ist also eine Überlagerung des Vektors der Grundwelle und des Trägersignals.

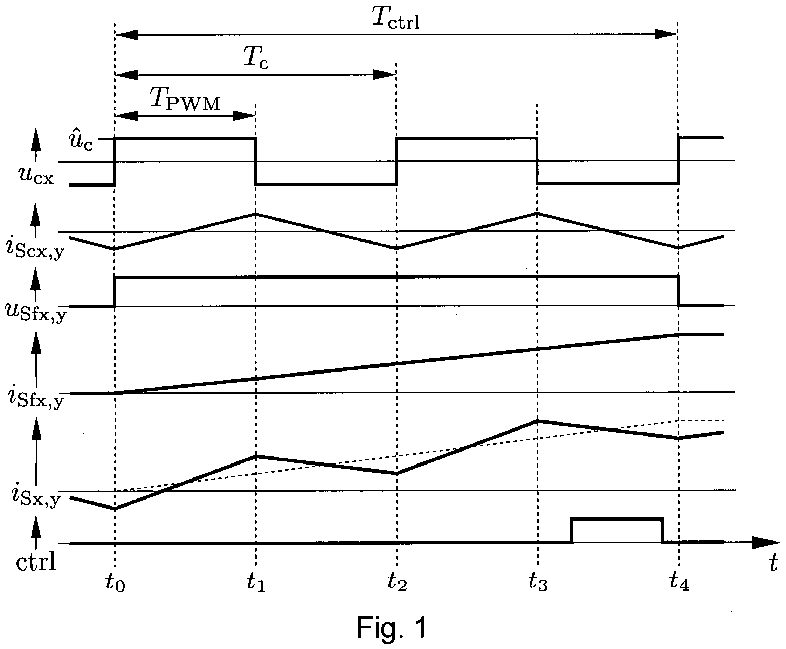

In Figur 1 sind beispielhafte idealisierte Strom- und Spannungsverläufe gezeigt.

Dabei ist ein beispielhafter Soll-Spannungsverlauf u_{Sfx,y} an den Eingangsklemmen des Elektromotors, insbesondere als Stellwert des Stromreglers, gezeigt, wobei das überlagerte hochfrequente Trägersignal weggelassen ist. Der Spannungsverlauf u_{cx} des hochfrequenten Trägersignals weist eine Periodendauer T_{c} auf, die beispielhaft dem Zweifachen der Pulsweitenmodulationsperiodendauer T_{PWM} entspricht.

Infolge der Motorinduktivität ergeben sich die zu den Spannungsverläufen zugehörigen Stromverläufe, nämlich der Stromverlauf i_{Scx,y} des hochfrequenten Trägersignals und der aus dem Spannungsverlauf u_{Sfx,y} resultierende Stromverlauf i_{Sfx,y} in einer Statorwicklung des Elektromotors. Der resultierende Gesamt-Stromverlauf i_{Sx,y} in der Statorwicklung des Elektromotors ist ebenfalls abgebildet.

Erfindungsgemäß wird der Motorstrom, also der Motorstromraumzeiger, jeweils zu den in Figur 1 gezeigten Zeitpunkten, nämlich zum Abtastzeitpunkt t₀, Abtastzeitpunkt t₁, Abtastzeitpunkt t₂ und Abtastzeitpunkt t₃ der Stromerfassung erfasst.

Diese Abtastzeitpunkte liegen synchron zum Pulsweitenmodulationssignal. Außerdem sind die Abtastzeitpunkte auch zeitgleich zu denjenigen Zeitpunkten gelegt, an denen das rechteckförmige Trägersignal seine Sprungstellen aufweist. An diesen Zeitpunkten weist also der Spannungsverlauf des Trägersignals die größten Spannungsveränderungen auf. Auf diese Weise sind also die jeweiligen Maxima und Minima des Stromverlaufs des Trägersignals an den Abtastzeitpunkten angeordnet und somit wird der Strom jeweils an diesen Extremwerten erfasst.

Mittels der synchronen Abtastung ist eine Bestimmung der durch den Spannungsverlauf des Trägersignals bewirkten, genannten lokalen Maxima und Minima des Stromverlaufs ermöglicht. Dabei wird innerhalb einer Pulsweitenmodulationsperiode ein linearer Stromverlauf angenommen, was bei einer Pulsweitenmodulationsfrequenz von mehreren kHz, beispielsweise etwa 4 kHz, 8 kHz oder sogar 16 kHz, eine sehr gute Näherung darstellt.

Im Gegensatz zur Verwendung eines Bandpassfilters zur Separation des hochfrequenten Trägersignals wird also keine Phasenverschiebung bewirkt. Denn die erfindungsgemäße synchrone Abtastung ermöglicht ein direktes Bestimmen des hochfrequenten Stromverlaufs.

Zur Separation des hochfrequenten Trägersignalanteils vom Grundwellenanteil wird nun angenommen, dass die Grundwelle ein Polynom zweiter Ordnung als Funktion der Zeit ist, wobei dieses durch drei Parameter bestimmt ist, und dass das Trägersignal aus linearen Funktionsabschnitten zusammengesetzt sei, wobei das Trägersignal synchron ist zur Pulsweitenmodulationsfrequenz. Somit ist die Amplitude des Trägersignals sowie die drei Parameter des Polynoms bestimmbar durch die 4 erfassten Stromwerte.

Auf diese Weise ist einerseits der Trägersignalverlauf und der Grundwellenverlauf in sehr guter Näherung bekannt gemacht und andererseits ist eine Extrapolation des zum Zeitpunkt t₄ zu erwartenden Stromwertes ausgeführt. Dabei ist der Zeitpunkt t₄ wiederum gleichmäßig beabstandet wie die Abtastzeitpunkte t₀, t₁, t₂, t₃. Die Zeitpunkte weisen also zu dem ihnen jeweils vorangehenden Zeitpunkt den gleichen Zeitabstand auf.

Wie schon oben geschildert erfolgt in jedem Zeitintervall T_{ctrl} eine erneute Bestimmung der Werte der Stellgrößen, insbesondere der Motorspannung. Die hierfür notwendigen Rechenschritte werden zwischen den Zeitpunkten t₃ und t₄ ausgeführt. Als Eingangsgröße für die Bestimmung wird der für den Zeitpunkt t₄ extrapolierte Stromwert des Grundwellenanteils verwendet. Auf diese Weise ist somit der wirklich vorhandene Stromwert zu diesem Zeitpunkt mit hoher Genauigkeit bekannt und zur Bestimmung der Stellgrößenwerte wird ein totzeitfreier Stromistwert verwendet.

Der hochfrequente Stromanteil wird zur Bestimmung des Rotorwinkels verwendet. Da er nicht durch ein Bandpassfilter oder ähnliche Mittel geführt ist, unterliegt er keiner Phasenverschiebung und erlaubt eine sehr präzise Bestimmung des Rotorlagewinkels. Insbesondere wird der so demodulierte hochfrequente Stromanteil auch bei dynamischen Veränderungen des Grundwellenanteils nicht verfälscht. Dies gilt auch dann, wenn der verwendete Motor signifikantes Sättigungsverhalten aufweist, wodurch die Grundwellenstromanstiege nichtlinear erfolgen.

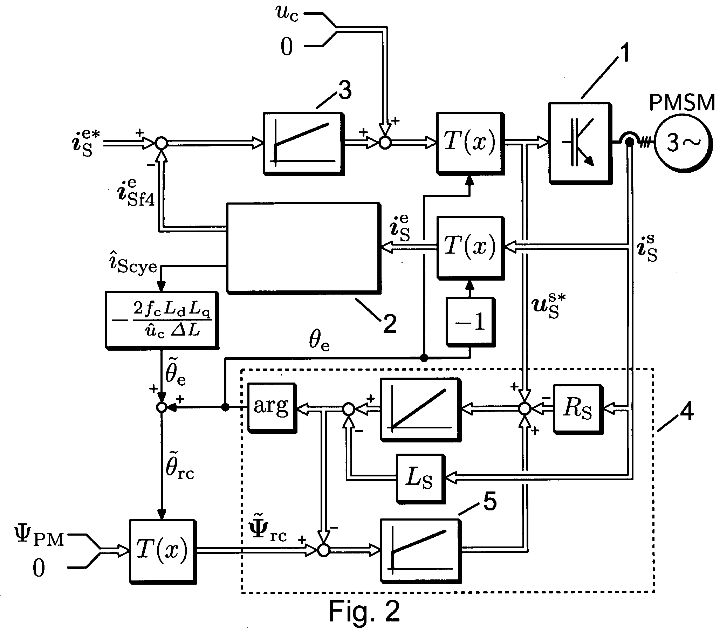

In Figur 2 ist für ein Ausführungsbeispiel der wesentliche Teil der Regelstruktur dargestellt, die für niedrige Drehzahlen des Rotors verwendet wird. Dabei wird die Speisespannung des Drehstrommotors mittels der Endstufe 1 zur Verfügung gestellt. Der erfasste Motorstrom, also der Stator-Stromraumzeiger i_{S}, wird mittels der Koordinatentransformation T(x) in einem Koordinatensystem dargestellt, das mittels des geschätzten Rotorlagewinkels verdreht ist gegen das ortsfeste Koordinatensystem. Der Stator-Stromraumzeiger wird dann einem Entkoppelungsmodul zugeführt, das - wie schon zuvor beschrieben - aus den erfassten Strommesswerten den hochfrequenten Signalanteil ausfiltert und einen extrapolierten Stromwert i_{Sf4} für den Grundwellenanteil bestimmt, der dem Stromregler, umfassend das Proportional- und Integrierglied 3, zugeführt wird. Dem Ausgangssignal des Proportional- und Integrierglieds 3 wird die Trägersignalspannung U_{C} überlagert und das Ergebnis als Stellgröße der pulsweitenmoduliert betriebenen Endstufe 1 zugeführt.

Der ausgefilterte hochfrequente Signalanteil wird in einen Fehlwinkel θ̃ₑ übergeführt, woraus unter Verwendung des geschätzten Rotorlagewinkels θₑ ein Referenzwinkel für die Rotorposition θ̃_{rc} bestimmt wird. Der somit bestimmte Modellwert für die Rotorlage wird als Richtung für einen geschätzten Rotorflussraumzeiger verwendet, der einem Flussmodell 4 zugeführt wird Dabei wird die Regelabweichung des Rotorflussraumzeigers einem Proportional- und Integrierglied 5 zugeführt.

Dabei wird der gestellte Spannungsraumzeiger u_{S} vermindert um den ohmschen Spannungsabfall R_{S} x i_{S} und dann aufsummiert, also integriert, auf den Wert des geschätzten Statorflussraumzeigers. Hiervon wird ein dem Statorstrom entsprechender Flussanteil abgezogen, wodurch ein Schätzwert für den Rotorflussraumzeiger bestimmt wird.

Das Argument des geschätzten Rotorflussraumzeigers wird verwendet, um zusammen mit dem ermittelten Fehlwinkel θ̃ₑ den Referenzwinkel für die Rotorposition θ̃_{rc} zu bestimmen.

Das Ausführungsbeispiel nach Figur 2 ist für niedrige Drehzahlen des Rotors vorteilhaft verwendbar.

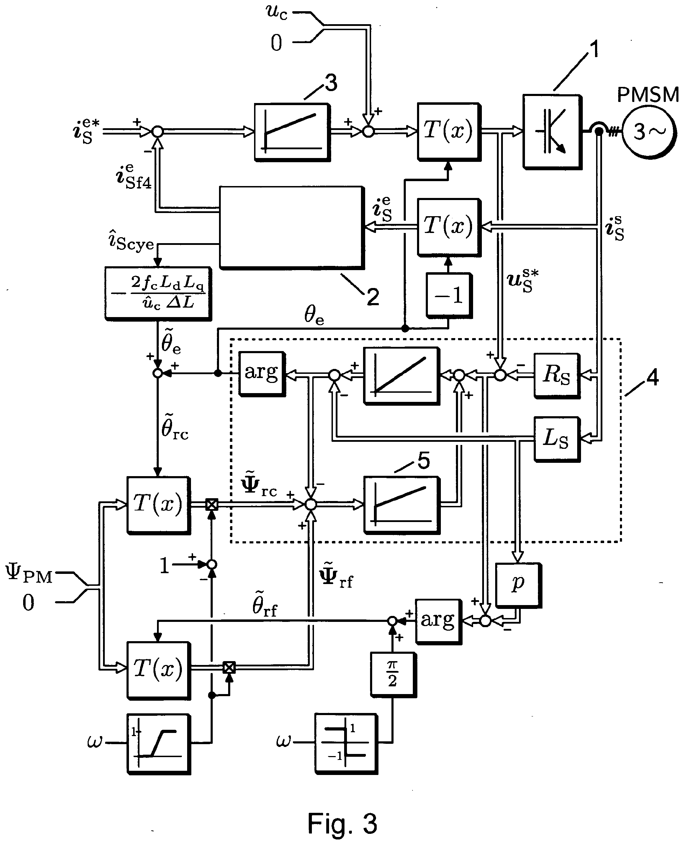

In Figur 3 wird ein weiteres Ausführungsbeispiel gezeigt, das für hohe und niedrige Frequenzen vorteilhaft verwendbar ist.

Dabei wird das Flussmodell für niedrige Drehzahlen auf einen Referenzflusszeiger gestützt, dessen Richtung aus dem hochfrequenten demodulierten Trägerstrom bestimmt wurde, wie zur Figur 2 beschrieben.

Bei sehr hohen Drehzahlen wird ebenfalls ein Rotorflussraumzeiger zur Stützung des Flussmodells verwendet, dessen Winkellage jedoch ohne Verwendung des hochfrequenten Trägerstromes bestimmt wird. Dieser Winkel wird derart bestimmt, dass er senkrecht gerichtet ist zur Richtung des induzierten Spannungsraumzeigers, der eingangsseitig im Flussmodell bestimmt wird. Die Rückführgröße ist also derart ausgestaltet, dass bei verschwindender Drift des Integrationsergebnisses des Integriergliedes im Flussmodell die Rückführgröße ebenfalls verschwindet.

Bei Frequenzen in einem vorgebbaren Übergangs-Frequenzbereich, der zwischen den genannten hohen und niedrigen Drehzahlen liegt, wird eine Mischung, insbesondere lineare Überlagerung abhängig von der Frequenz, der beiden Rotorflussraumzeiger bestimmt und dann als Stützung des Flussmodells verwendet.

Weitere Details und Merkmale der Erfindung sind den Figuren entnehmbar und dort für den Fachmann genügend deutlich ersichtlich.

### Bezugszeichenliste

1 Endstufe
2 Entkoppelungsmodul
3 Proportional- und Integrierglied
4 Flussmodell
5 Proportional- und Integrierglied

U_{cx} Spannungsverlauf des hochfrequenten Trägersignals
i_{Scx,y} Stromverlauf des hochfrequenten Trägersignals
u_{Sfx,y} Spannungsverlauf des Grundwellenanteils der Motorspannung, insbesondere als Stellwert des Stromreglers
i_{Sfx,y} aus u_{Sfx,y} resultierender Stromverlauf in einer Statorwicklung des Elektromotors
i_{Sx,y} resultierender Gesamt-Stromverlauf in einer Statorwicklung des Elektromotors

T_{ctrl} Periodendauer des Stromreglers
T_{c} Periodendauer des hochfrequenten Trägersignals
T_{PWM} Pulsweitenmodulationsperiodendauer
t₀ Abtastzeitpunkt der Stromerfassung
t₁ Abtastzeitpunkt der Stromerfassung
t₂ Abtastzeitpunkt der Stromerfassung
t₃ Abtastzeitpunkt der Stromerfassung
t₄ Prognosezeitpunkt für den Strom

PMSM Synchronmotor mit auf seinem Rotor angeordneten Permanentmagneten

## Patentansprüche

1. Verfahren zur Bestimmung der Rotorlage (θₑ) einer feldorientiert betriebenen Synchronmaschine, die eine von der Rotorlage abhängige wirksame Induktivität aufweist,
wobei der Motorstrom (*i^{s}_{S}*) erfasst wird und die Motorspannung (*u^{s}_{S}*) unter Verwendung eines Pulsweitenmodulationsverfahrens gestellt wird, wobei ein zur Pulsweitenmodulationsfrequenz synchrones Signal dem zu stellenden Motorspannungswert überlagert wird ,
wobei synchron zur Pulsweitenmodulationsfrequenz Werte des Motorstroms (*i^{s}_{S}*) erfasst werden,
wobei ein durch das überlagerte Spannungssignal bewirkter Stromanteil (*î_{Scye}*) und ein restlicher Stromanteil (*i^{e}_{Sf4}*), also der Grundwellenanteil, bestimmt werden
wobei aus dem durch das überlagerte Spannungssignal bewirkten Stromanteil eine geschätzte Rotorwinkellage bestimmt wird, deren Fehlwinkel zur tatsächlichen Rotorwinkellage mittels eines Flussmodells (4) vermindert wird,
wobei der restliche Stromanteil einem Stromregler (3) zugeführt wird, **dadurch gekennzeichnet,**
**dass** im Flussmodell unter Verwendung des Motorstroms (*i^{s}_{S}*) und der Motorspannung (*u^{s*}_{S}*) **ein Rotorflussraumzeiger bestimmt wird, dessen Differenz** zum **geschätzten Rotorflussraumzeiger einem Proportional-Integrierglied zugeführt wird,**
**wobei das Ausgangssignal des Proportional-Integriergliedes** (5) **zur Driftreduzierung eines Integriergliedes des Flussmodells (4) verwendet wird.**

2. Verfahren nach mindestens Anspruch 1,
**dadurch gekennzeichnet, dass**
eine Anzahl von Motorstrommesswerten zum Bestimmen von Parametern verwendet wird, die in einer dem Grundwellenanteil zugeordneten ersten parameterbehafteten Funktion vorgesehen sind und in einer dem durch das überlagerte Spannungssignal bewirkten Stromanteil zugeordneten zweiten parameterbehafteten Funktion,
insbesondere wobei die Summe der parameterbehafteten Funktionen an die erfassten Stromwerte angepasst und/oder als Fittfunktionen angefittet werden.

3. Verfahren nach mindestens einem der vorangegangenen Ansprüche,
**dadurch gekennzeichnet, dass**
die erste parameterbehaftete Funktion ein Polynom n-ter Ordnung ist, insbesondere wobei die Anzahl von Motorstrommesswerten um Eins größer ist als n,
und/oder dass die zweite parameterbehaftete Funktion ein Dreieckssignal und/oder eine aus linearen Abschnitten zusammengesetzte Funktion ist, insbesondere deren Amplitude ein Parameter ist und deren Frequenz synchron zur Pulsweitenmodulationsfrequenz ist.

4. Verfahren nach mindestens einem der vorangegangenen Ansprüche,
**dadurch gekennzeichnet, dass**
die Anzahl vier beträgt oder größer als vier ist.

5. Verfahren nach mindestens einem der vorangegangenen Ansprüche,
**dadurch gekennzeichnet, dass**
nach Bestimmung der Parameter der parameterbehafteten Funktionen ein Stromwert extrapoliert wird für einen Zeitpunkt, an welchem die Werte der Stellgröße, insbesondere der Ausgangsspannung, wirksam gemacht werden, so dass zur Bestimmung der Werte der Stellgröße ein zeitgleicher Stromwert verwendet wird.

6. Verfahren nach mindestens einem der vorangegangenen Ansprüche,
**dadurch gekennzeichnet, dass**
die Amplitude des durch das überlagerte Spannungssignal bewirkten Stromanteils aus einer Linearkombination von mindestens drei der erfassten Strommesswerte bestimmt wird.

7. Verfahren nach mindestens einem der vorangegangenen Ansprüche,
**dadurch gekennzeichnet, dass**
ein extrapolierter Stromwert für einen Zeitpunkt, an welchem ein Wert der Stellgröße, insbesondere der Ausgangsspannung, wirksam gemacht werden, bestimmt wird durch Linearkombination von mindestens drei der erfassten Strommesswerte.

8. Verfahren nach mindestens einem der vorangegangenen Ansprüche,
**dadurch gekennzeichnet, dass**
ein Modellwert für die Winkellage aus den gemessenen elektrischen Größen Motorspannung und Motorstrom bestimmt wird, insbesondere wobei die Synchronmaschine ohne Winkellage-Sensor ausgestattet ist.

9. Verfahren nach mindestens einem der vorangegangenen Ansprüche,
**dadurch gekennzeichnet, dass**
die wirksame Induktivität in verschiedenen Rotorwinkellagen verschiedene Werte aufweist, und/oder dass
die Periodendauer des überlagerten Signals das n-fache der Pulsweitenmodulationsdauer beträgt, wobei n eine ganz Zahl ist, die größer ist als Eins.

10. Verfahren nach mindestens einem der vorangegangenen Ansprüche,
**dadurch gekennzeichnet, dass**
der zu stellende Motorspannungswert nach einer jeweiligen Zeitdauer T_{ctrl} bestimmt wird, insbesondere die das Vierfache oder ein höheres ganzzahliges Vielfaches der Pulsweitenmodulationsdauer beträgt,
und/oder dass
synchron zu den Zeitpunkten der größten Signalspannungsänderung der Motorstrom erfasst wird.

11. Verfahren nach mindestens einem der vorangegangenen Ansprüche,
**dadurch gekennzeichnet, dass**
der durch das überlagerte Spannungssignal bewirkter Stromanteil vom erfassten Strom subtrahiert wird und der so bestimmte Motorstrom als Istwert der feldorientierten Regelung zugeführt wird.

12. Verfahren nach mindestens einem der vorangegangenen Ansprüche,
**dadurch gekennzeichnet, dass**
ein geschätzter Flussraumzeiger erzeugt wird, dessen Richtung der geschätzten Rotorwinkellage entspricht und dieser geschätzte Flussraumzeiger dem Flussmodell zur Stützung zugeführt wird,
wobei dem Flussmodell auch der jeweilige Wert der gestellten Ausgangsspannung und des erfassten Motorstroms zugeführt wird.

13. Verfahren nach mindestens einem der vorangegangenen Ansprüche, **dadurch gekennzeichnet, dass**
unterhalb einer ersten Drehzahl das Flussmodell gestützt wird durch den auf dem geschätzten Rotorlagewinkel basierten Rotorflussraumzeiger, insbesondere wobei der Betrag vorgebbar ist und die Richtung aus dem durch das überlagerte Spannungssignal bewirkten Stromanteil geschätzt wird,
und/oder dass
oberhalb einer zweiten Drehzahl das Flussmodell gestützt wird durch einen Rotorflussraumzeiger, dessen Betrag vorgebbar und dessen Richtung senkrecht steht auf der Richtung des induzierten Spannungsraumzeigers, der eingangsseitig am Flussmodell gebildet wird,
und/oder dass
zwischen der ersten und zweiten Drehzahl das Flussmodell gestützt wird durch einen Rotorflussraumzeiger, der als Summe gebildet ist aus einem ersten Anteil vom auf dem geschätzten Rotorlagewinkel basierten Rotorflussraumzeiger und aus einem weiteren Anteil vom demjenigen Rotorflussraumzeiger, dessen Betrag vorgebbar und dessen Richtung senkrecht steht auf der Richtung des induzierten Spannungsraumzeigers, der eingangsseitig am Flussmodell gebildet wird, wobei das Verhältnis der Anteile frequenzabhängig ist.

14. Verfahren nach mindestens einem der vorangegangenen Ansprüche, **dadurch gekennzeichnet, dass**
die erste Drehzahl kleiner ist als die zweite Drehzahl.

## Claims

1. Method for determining the rotor position (θₑ) of a synchronous machine that is operated in a field-oriented manner and has an active inductance dependent on the rotor position,
wherein the motor current (*i^{s}_{S}*) is detected and the motor voltage (*u^{s}_{S}*) is set using a pulse-width modulation procedure,
wherein a signal synchronous with the pulse-width modulation frequency is superimposed on the motor voltage value to be set,
wherein values of the motor current (*i^{s}_{S}*) are detected synchronously with the pulse-width modulation frequency,
wherein a current fraction (*î_{Scye}*) brought about by the superimposed voltage signal and a remaining current fraction (*i^{e}_{Sf4}*), i.e. the fundamental wave fraction, are determined, wherein an estimated rotor angular position is determined from the current fraction brought about by the superimposed voltage signal, the phase angle error of said position with respect to the actual rotor angular position being reduced by means of a flux model (4), wherein the remaining current fraction is supplied to a current regulator (3),
**characterised in that**
in the flux model, a rotor flux space vector is determined using the motor current (*i^{s}_{S}*) and the motor voltage (*u^{s*}_{S}*) and the difference between said vector and the estimated rotor flux space vector is supplied to a proportional integrator,
wherein the output signal of the proportional integrator (5) is used to reduce the drift of an integrator of the flux model (4).

2. Method according to at least claim 1,
**characterised in that**
a number of motor current measurements are used to determine parameters that are provided in a first parameter-based function assigned to the fundamental wave fraction and in a second parameter-based function assigned to the current fraction brought about by the superimposed voltage signal,
in particular wherein the sum of the parameter-based functions is adapted to the detected current values and/or fitted as fitting functions.

3. Method according to at least one of the preceding claims,
**characterised in that**
the first parameter-based function is a polynomial of the nth order, in particular wherein the number of motor current measurements is one greater than n,
and/or **in that** the second parameter-based function is a triangular signal and/or a function composed of linear portions, in particular the amplitude of said function being a parameter and the frequency thereof being synchronous with the pulse-width modulation frequency.

4. Method according to at least one of the preceding claims,
**characterised in that**
the number is four or is greater than four.

5. Method according to at least one of the preceding claims,
**characterised in that**
after determining the parameters of the parameter-based functions, a current value is extrapolated for a point in time at which the values of the manipulated variable, in particular the output voltage, are rendered active, such that an isochronal current value is used to determine the values of the manipulated variable.

6. Method according to at least one of the preceding claims,
**characterised in that**
the amplitude of the current fraction brought about by the superimposed voltage signal is determined from a linear combination of at least three of the detected current measurements.

7. Method according to at least one of the preceding claims,
**characterised in that**
by means of a linear combination of at least three of the detected current measurements, an extrapolated current value is determined for a point in time at which a value of the manipulated variable, in particular the output voltage, is rendered active.

8. Method according to at least one of the preceding claims,
**characterised in that**
a model value for the angular position is determined from the measured electrical variables of motor voltage and motor current, in particular wherein the synchronous machine is not equipped with an angular-position sensor.

9. Method according to at least one of the preceding claims
**characterised in that**
the active inductance has different values in different rotor angular positions,
and/or **in that**
the period duration of the superimposed signal is n-times the pulse-width modulation duration, where n is an integer greater than one.

10. Method according to at least one of the preceding claims
**characterised in that**
the motor voltage value to be set is determined after a particular time period T_{ctrl}, which in particular is four times the pulse-width modulation duration or a higher integer multiple of the pulse-width modulation duration,
and/or **in that**
the motor current is detected synchronously with the times of the largest signal voltage change.

11. Method according to at least one of the preceding claims,
**characterised in that**
the current fraction brought about by the superimposed voltage signal is subtracted from the detected current, and the motor current thus determined is supplied to the field-oriented controller as an actual value.

12. Method according to at least one of the preceding claims,
**characterised in that**
an estimated flux space vector is generated, the direction of which corresponds to the estimated rotor angular position, and said estimated flux space vector is supplied to the flux model for support,
wherein the respective values of the set output voltage and detected motor current are also supplied to the flux model.

13. Method according to at least one of the preceding claims,
**characterised in that**
below a first speed, the flux model is supported by the rotor flux space vector based on the estimated rotor position angle, in particular wherein the magnitude can be preset and the direction is estimated from the current fraction brought about by the superimposed voltage signal,
and/or **in that**
above a second speed, the flux model is supported by a rotor flux space vector, the magnitude of which can be preset and the direction of which is perpendicular to the direction of the induced voltage space vector formed at the input of the flux model,
and/or **in that**
between the first and second speeds, the flux model is supported by a rotor flux space vector formed as the sum of a first fraction of the rotor flux space vector that is based on the estimated rotor position angle, and an additional fraction of the rotor flux space vector whose magnitude can be preset and whose direction is perpendicular to the direction of the induced voltage space vector formed at the input of the flux model, wherein the ratio of the fractions is dependent on the frequency.

14. Method according to at least one of the preceding claims,
**characterised in that**
the first speed is lower than the second speed.

## Revendications

1. Procédé pour déterminer la position de rotor (θₑ) d'une machine synchrone commandée par orientation de champ qui présente une inductance effective dépendant de la position de rotor,
dans lequel le courant de moteur (*i^{s}_{S}*) est détecté et la tension de moteur (*u^{s}_{S}*) est réglée en utilisant un procédé de modulation de largeur d'impulsion ;
dans lequel un signal synchrone avec la fréquence de modulation de largeur d'impulsion est superposé à la valeur de tension de moteur à régler,
dans lequel des valeurs du courant de moteur (*i^{s}_{S}*) sont détectées de manière synchrone avec la fréquence de modulation de largeur d'impulsion,
dans lequel une composante de courant (*î_{Scye}*) produite par le signal de tension superposé et une composante de courant restante (*i^{e}_{Sf4}*), c'est-à-dire la composante d'onde fondamentale, sont déterminées,
dans lequel une position angulaire de rotor estimée est déterminée à partir de la composante de courant produite par le signal de tension superposé, dont l'erreur angulaire par rapport à la position angulaire de rotor réelle est réduite au moyen d'un modèle de flux (4),
dans lequel la composante de courant restante est amenée à un régulateur de courant (3),
**caractérisé en ce**
**qu'**un vecteur spatial de flux de rotor est déterminé dans le modèle de flux en utilisant le courant de moteur (*i^{s}_{S}*) et la tension de moteur (*u^{s*}_{S}*), dont la différence par rapport au vecteur spatial de flux de rotor estimé est amenée à un élément à action proportionnelle et intégrale,
dans lequel le signal de sortie de l'élément à action proportionnelle et intégrale (5) est utilisé pour réduire la dérive d'un élément à action intégrale du modèle de flux (4).

2. Procédé selon au moins la revendication 1,
**caractérisé en ce**
**qu'**un certain nombre de valeurs de mesure de courant de moteur sont utilisées pour déterminer des paramètres qui sont prévus dans une première fonction paramétrée associée à la composante d'onde fondamentale et dans une deuxième fonction paramétrée associée à la composante de courant produite par le signal de tension superposé,
en particulier la somme des fonctions paramétrées étant adaptée aux valeurs de courant détectées et/ou ajustée sous la forme de fonctions d'ajustement.

3. Procédé selon au moins l'une des revendications précédentes,
**caractérisé en ce**
**que** la première fonction paramétrée est un polynôme d'ordre n, en particulier le nombre de valeurs de mesure de courant de moteur étant supérieur à n de un et/ou
**que** la deuxième fonction paramétrée est un signal triangulaire et/ou une fonction composée de sections linéaires, en particulier dont l'amplitude est un paramètre et dont la fréquence est synchrone avec la fréquence de modulation de largeur d'impulsion.

4. Procédé selon au moins l'une des revendications précédentes,
**caractérisé en ce**
**que** le nombre est quatre ou supérieur à quatre.

5. Procédé selon au moins l'une des revendications précédentes,
**caractérisé en ce**
**que**, après que les paramètres des fonctions paramétrées ont été déterminés, une valeur de courant est extrapolée pour un instant auquel les valeurs de la grandeur réglée, en particulier de la tension de sortie, sont rendues effectives, de sorte qu'une valeur de courant isochrone est utilisée pour déterminer les valeurs de la grandeur réglée.

6. Procédé selon au moins l'une des revendications précédentes,
**caractérisé en ce**
**que** l'amplitude de la composante de courant produite par le signal de tension superposé est déterminée à partir d'une combinaison linéaire d'au moins trois des valeurs de mesure de courant détectées.

7. Procédé selon au moins l'une des revendications précédentes,
**caractérisé en ce**
**qu'**une valeur de courant extrapolée pour un instant auquel une valeur de la grandeur réglée, en particulier de la tension de sortie, est rendue effective, est déterminée par combinaison linéaire d'au moins trois des valeurs de mesure de courant détectées.

8. Procédé selon au moins l'une des revendications précédentes,
**caractérisé en ce**
**qu'**une valeur de modèle pour la position angulaire est déterminée à partir des grandeurs électriques mesurées tension de moteur et courant de moteur, en particulier la machine synchrone n'étant pas équipée d'un capteur de position angulaire.

9. Procédé selon au moins l'une des revendications précédentes,
**caractérisé en ce**
**que** l'inductance effective présente des valeurs différentes dans différentes positions angulaires de rotor
et/ou
**que** la durée de période du signal superposé est n fois la durée de modulation de largeur d'impulsion, n étant un entier qui est supérieur à un.

10. Procédé selon au moins l'une des revendications précédentes,
**caractérisé en ce**
**que** la valeur de tension de moteur à régler est déterminée après une durée respective T_{ctrl} qui est en particulier le quadruple ou un multiple entier supérieur de la durée de modulation de largeur d'impulsion
et/ou
**que** le courant de moteur est détecté de façon synchrone avec les instants de plus grande variation de tension de signal.

11. Procédé selon au moins l'une des revendications précédentes,
**caractérisé en ce**
**que** la composante de courant produite par le signal de tension superposé est soustraite du courant détecté et le courant de moteur ainsi déterminé est amené en tant que valeur réelle à la régulation par orientation de champ.

12. Procédé selon au moins l'une des revendications précédentes,
**caractérisé en ce**
**qu'**un vecteur spatial de flux estimé est généré, dont la direction correspond à la position angulaire de rotor estimée et ce vecteur spatial de flux estimé est amené au modèle de flux pour son soutien,
la valeur respective de la tension de sortie réglée et du courant de moteur détecté étant également amenée au modèle de flux.

13. Procédé selon au moins l'une des revendications précédentes,
**caractérisé en ce**
**qu'**en dessous d'une première vitesse de rotation, le modèle de flux est soutenu par le vecteur spatial de flux de rotor basé sur l'angle de position de rotor estimé, en particulier la norme pouvant être prédéfinie et la direction étant estimée à partir de la composante de courant produite par le signal de tension superposé et/ou
**qu'**au-dessus d'une deuxième vitesse de rotation, le modèle de flux est soutenu par un vecteur spatial de flux de rotor dont la norme peut être prédéfinie et dont la direction est perpendiculaire à la direction du vecteur spatial de tension induite qui est formé du côté entrée sur le modèle de flux
et/ou
**qu'**entre les première et deuxième vitesses de rotation, le modèle de flux est soutenu par un vecteur spatial de flux de rotor qui est formé comme la somme d'une première partie du vecteur spatial de flux de rotor basé sur l'angle de position de rotor estimé et d'une autre partie du vecteur spatial de flux de rotor dont la norme peut être prédéfinie et dont la direction est perpendiculaire à la direction du vecteur spatial de tension induite qui est formé du côté entrée sur le modèle de flux, le rapport des parties dépendant de la fréquence.

14. Procédé selon au moins l'une des revendications précédentes,
**caractérisé en ce que**
la première vitesse de rotation est inférieure à la deuxième vitesse de rotation.
